# EUROPEAN PATENT APPLICATION

(11) **EP 4 393 363 A1**
(43) Date of publication of application: **03.07.2024**
(21) Application number: 22861607.4
(22) Date of filing: 11.08.2022
(51) Int. Cl.: A47J 43/08, A23L 23/00, A47J 43/07

(54) **SAUCE SPREADING APPARATUS AND EDIBLE PRODUCT MANUFACTURING SYSTEM INCLUDING SAME**

(30) Priority: 24.08.2021 KR 20210111979
(71) Applicant: CJ CheilJedang Corporation, Seoul 04560 (KR)
(72) Inventor: HWANG, Jai Mun, Seoul 04560 (KR); JUNG, Tae Hyun, Seoul 04560 (KR); KWAK, Dong Ju, Seoul 04560 (KR); LEE, Jun Seok, Seoul 04560 (KR); CHOI, So Jeong, Seoul 04560 (KR); JEONG, Jee Hwan, Seoul 04560 (KR); LEE, Ga Yeong, Seoul 04560 (KR)
(74) Representative: Bandpay & Greuter
(86) International application number: PCT/KR2022/012045
(87) International publication number: WO 2023/027397

(57) **Abstract**

A sauce spreading apparatus according to the present invention includes: a stirring part including a stirring module provided to, by rotating, stir a semi-finished product together with an input seasoning so as to produce a product; an input part provided to move the semi-finished product forward so as to deliver same to the stirring module; and a discharge part provided to move forward the product discharged from the stirring part, so as to provide same to a workbench.

## Description

### [Technical Field]

The present disclosure relates to a seasoning applying apparatus for producing an edible product, and an edible product production system including the same.

### [Background Art]

A process of processing a given ingredient is required to produce food, and this processing may include not only washing or trimming ingredients, but also adding seasoning including other ingredients. Seasoning may be applied to the ingredients, and here, application may include bringing the seasoning into contact with surfaces of the ingredients as well as spreading the seasoning on a inside of the ingredients. In general, salting foods may be made in this way. Pickled foods are foods, a storability of which is improved by adding salt, and include kimchi, pickled radish, pickled vegetables, and cucumber kimchi, and among them, kimchi, especially bunch kimchi is a representative example.

When bunch kimchi is made, whole cabbages wrapped in several layers of leaves may be cut and pickled in brine, seasoning may be applied, and then they may be aged. Seasoning used in making bunch kimchi may be kimchi filling including radish greens, red pepper powder, minced garlic, salted shrimp, and the like.

With the kimchi filling contained in a large-capacity storage tank, seasoning is generally applied by an operator who grasps the pickled cabbage one by one near the storage tank and scoops up an appropriate amount of the kimchi filling. However, when this method is used, the operator picks up the kimchi filling with his or her eyes and applies it to the pickled cabbage, and thus there is a large difference between operators in the appropriate amount of seasoning, and it is not guaranteed that even the same operator will apply a uniform amount of seasoning. Because the entire process of applying the seasoning is done by the operator, each operator has to spend a very long time to produce one product to evenly apply the seasoning to the bunch kimchi, and thus a productivity of the overall product production process deteriorates.

### [Disclosure]

### [Technical Problem]

The present disclosure has been made to solve the above problems, and provides a seasoning applying apparatus that may uniformly apply seasoning to an edible product while improving a productivity of the edible product, and an edible product production system including the same.

### [Technical Solution]

According to an aspect of the present disclosure, a seasoning applying apparatus includes an agitation part including an agitation module that agitates an introduced semi-finished product together with seasoning while being rotated to produce a product, an introduction part that moves the semi-finished product forward and deliver the semi-finished product to the agitation module, and a discharge part that moves the product discharged from the agitation part forward and provide the product to a workbench.

According to another aspect of the present disclosure, an edible product production system includes a seasoning providing apparatus that provides seasoning to a raw material to form a semi-finished product, and a seasoning applying apparatus that applies the seasoning to the semi-finished product to form a product, and the seasoning applying apparatus includes an agitation part including a plurality of agitation modules that agitates the introduced semi-finished product together with the seasoning, and an introduction part that moves the semi-finished product delivered from the seasoning providing apparatus forward and selectively deliver the semi-finished product to any one of the plurality of agitation modules.

### [Advantageous Effects]

Accordingly, because a large amount of edible products may be produced in a short time, productivity may be improved and seasoning may be uniformly applied to the edible product.

### [Description of Drawings]

FIG. 1 is a conceptual view of an edible product production system according to an embodiment of the present disclosure.
FIG. 2 is a conceptual view of a seasoning applying apparatus according to an embodiment of the present disclosure.
FIG. 3 is a view conceptually illustrating a shape of a seasoning applying apparatus, viewed from a top according to an embodiment of the present disclosure.
FIG. 4 is a view conceptually illustrating a shape of the seasoning applying apparatus, viewed from the side according to an embodiment of the present disclosure.
FIG. 5 is a perspective view of a discharge part of a seasoning applying apparatus according to an embodiment of the present disclosure.

### [Mode for Invention]

This application claims the benefit of priority to Korean Patent Application No. 10-2021-0111979, filed in the Korean Intellectual Property Office on August 24, 2021, the entire contents of which are incorporated herein by reference.

Hereinafter, embodiments of the present disclosure will be described in detail with reference to the accompanying drawings. In adding reference numerals to the components of the drawings, it is noted that the same components are denoted by the same reference numerals even when they are drawn in different drawings. Furthermore, in describing the embodiments of the present disclosure, when it is determined that a detailed description of related known configurations and functions may hinder understanding of the embodiments of the present disclosure, a detailed description thereof will be omitted.

Furthermore, in describing the components of the embodiments of the present disclosure, terms, such as first, second, "A", "B", (a), and (b) may be used. The terms are simply for distinguishing the components, and the essence, the sequence, and the order of the corresponding components are not limited by the terms. When it is described that a certain component is "connected to", "coupled to" or "electrically connected to" a second component, it should be understood that the component may be directly connected or electrically connected to the second component, but a third component may be "connected" or "electrically connected" between the components.

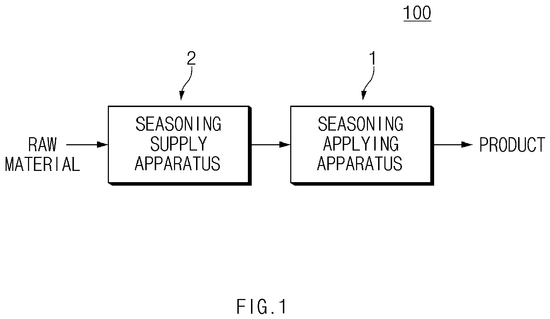

FIG. 1 is a conceptual view of an edible product production system 100 according to an embodiment of the present disclosure.

Referring to the drawing, the edible product production system 100 according to an embodiment of the present disclosure includes a seasoning providing apparatus 2 and a seasoning applying apparatus 1. A raw material is introduced into the seasoning providing apparatus 2, and seasoning is supplied to the raw material from the seasoning providing apparatus 2 to form a semi-finished product "M" that is the raw material, on which the seasoning is applied, and the semi-finished product "M" is delivered to the seasoning applying apparatus 1, and thus, through the application of the seasoning to the semi-finished product "M", a product "P" that is the raw material, on which the seasoning is secondarily applied more uniformly, is formed and discharged. The seasoning may be provided in the form, in which the seasoning is discharged to the raw material. In the specification of the present disclosure, it is assumed in a description thereof that the raw material is pickled cabbage and the product "P" is bunch kimchi, but the kinds of the raw material and the product "P" that may be produced from the raw material are not limited thereto.

A progress direction of an overall process of introducing the raw material, discharging the product "P", and delivering the semi-finished product "M" will be referred to as a reference direction. The seasoning applying apparatus 1 and the seasoning providing apparatus 2 may be arranged along the reference direction. The reference direction may be a direction on a straight line, but may not draw a straight line. In an embodiment of the present disclosure, the reference direction is assumed to be a forward direction, but the direction is not limited thereto. Furthermore, in the specification of the present disclosure, a forward direction, a rearward direction, a leftward direction, a rightward direction, an upward direction, a downward direction are expressions used for convenience of description, and may be relatively determined depending on directions, in which the edible product production system 100 and the components are disposed.

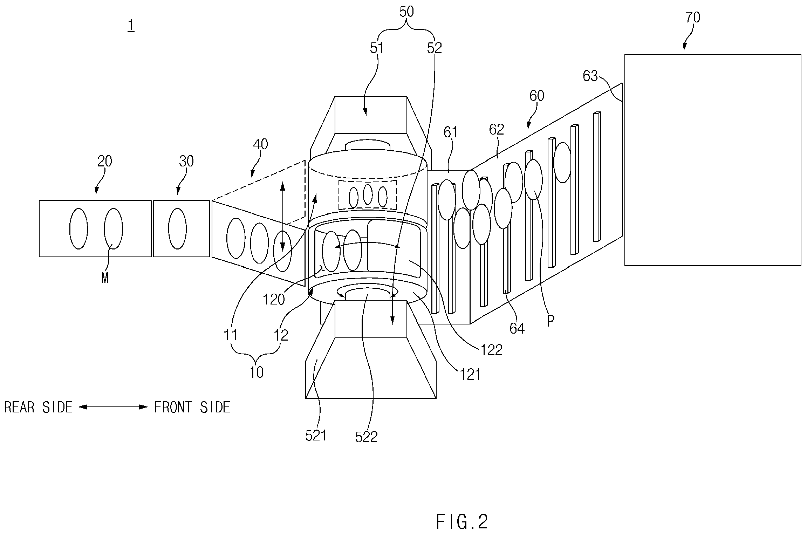

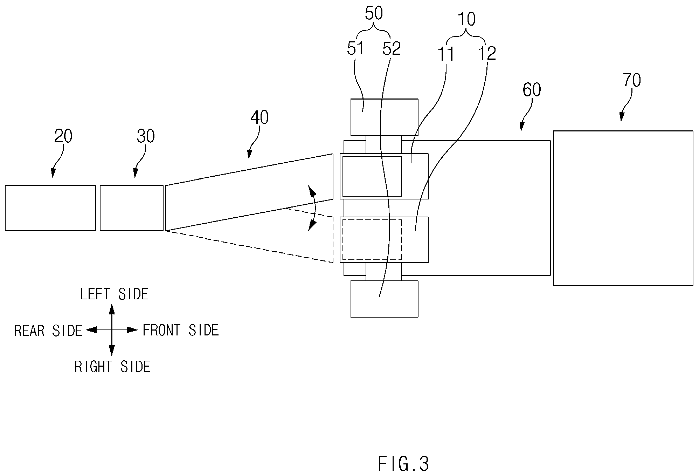

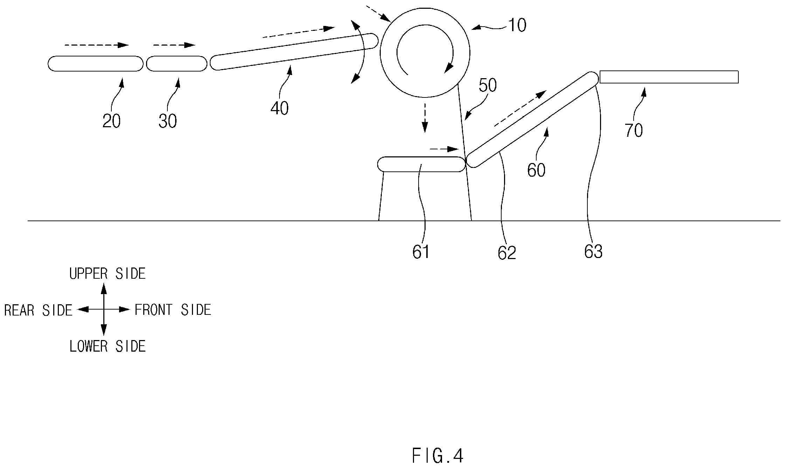

FIG. 2 is a conceptual view of the seasoning applying apparatus 1 according to an embodiment of the present disclosure. FIG. 3 is a view conceptually illustrating a shape of the seasoning applying apparatus 1, viewed from a top according to an embodiment of the present disclosure. FIG. 4 is a view conceptually illustrating a shape of the seasoning applying apparatus 1, viewed from a lateral side according to an embodiment of the present disclosure.

Referring to the drawings, the seasoning applying apparatus 1 according to an embodiment of the present disclosure includes an introduction part 40 and an agitation part 10. The seasoning applying apparatus 1 may include a discharge part 60. The components of the seasoning applying apparatus 1 may be arranged one by one forward.

### Division Part 20

The seasoning applying apparatus 1 according to an embodiment of the present disclosure may include a division part 20. The division part 20 is a part that transfers the semi-finished product "M" from a rear side to a front side of the introduction part 40 to transfer individual semi-finished products "M" to the introduction part 40. The division part 20 may include a conveyor belt that extends forward, and may transfer the semi-finished product "M" delivered from the seasoning providing apparatus 2 forward while being seated on an upper surface thereof. For the division part 20 to divide the semi-finished products "M" into individual ones and deliver the to the introduction part 40, a speed, at which the division part 20 is driven, may be higher than a driving speed of a semi-finished product discharge member of the seasoning providing apparatus 2. The division part 20 may transfer the semi-finished products "M" along a forward direction at a higher speed than at a speed, at which the semi-finished product "M" is received, to increase an interval between the semi-finished products "M" whereby the semi-finished products "M" may be individually distinguished as much as possible.

### Semi-finished Product Counting Part 30

The seasoning applying apparatus 1 according to an embodiment of the present disclosure may include a semi-finished product counting part 30. The semi-finished product counting part 30 counts the number of the passing semi-finished products "M", and then delivers the semi-finished products "M" to the introduction part 40. The semi-finished product counting part 3 may include a counting conveyor for transferring the semi-finished products "M" and an optical sensor, and may count the number of the semi-finished products "M" seated on an upper side of the counting conveyor. The optical sensor may be a camera that acquires images of the counting conveyor, through which the semi-finished products "M" pass, and may recognize and count the semi-finished products from these images. The semi-finished product counting part 30 may be electrically connected to a processor, which will be described later, and may transmit the number of acquired images or semi-finished products "M" to the processor. The processor may perform calculations by using the number of received images or semi-finished products "M", and may control the components of the seasoning applying apparatus 1 based on this. The details of a specific control will be described later.

The semi-finished product counting part 30 may be located on a front side of the division part 20 and may receive the semi-finished products "M" from the division part 20, and may be located in a rear side of the introduction part 40 to deliver the semi-finished products "M", the images of which are acquired by the introduction part 40. The semi-finished product counting part 30 may include a conveyor belt as the counting conveyor as described above to transfer the semi-finished products "M", but the means used to transfer the semi-finished products "M" are not limited thereto, and various devices such as robot arms and rollers may be used as a means of movement. Furthermore, the optical sensor may also be an IR sensor that may recognize passing of an object, other than a camera.

### Introduction Part 40

The introduction part 40 moves the semi-finished product "M" forward and selectively delivers it to one of the two agitation modules 11 and 12 of the agitation part 10, which will be described later. The introduction part 40 may transfer the semi-finished product "M" that has passed through the semi-finished product counting part 30 to the agitation part 10.

The introduction part 40 may be a swing conveyor. The swing conveyor is a device that transfers a seated object along an extension direction, but may control a direction it faces. The two agitation modules 11 and 12 may include a first agitation module 11 and a second agitation module 12, and the introduction part 40 may have a first state, in which the semi-finished product "M" is provided to the first agitation module 11, and a second state, in which the semi-finished product "M" is provided to the second agitation module 12. In the first state, a front end of the introduction part 40 may be located adjacent to the first agitation module 11, and in the second state, the front end of the introduction part 40 may be located adjacent to the second agitation module 12.

To have the above-described first state and second state, the introduction part 40 may be located at the rear end, and may be rotated about an imaginary line that extends in an upward/downward direction. The first agitation module 11 and the second agitation module 12 may be arranged along the leftward/rightward direction, and as the introduction part 40 is rotated, a position of the front end of the introduction part 40 be moved along the leftward/rightward to be adjacent to the first agitation module 11 or adjacent to the second agitation module 12. However, in the case of the imaginary line that is a rotation axis of the introduction part 40, as long as the position of the front end of the introduction part 40 may be moved to the left side or right side according to the rotation of the introduction part 40, it may also extend in another direction.

The introduction part 40 may have a shape that is inclined upward with respect to the forward direction. Accordingly, the semi-finished product "M" seated on the introduction part 40 may be lifted while moving forward. The semi-finished product "M" that has reached the front end of the introduction part 40 may drop into the agitation openings 120 located on the upper sides of the agitation modules 11 and 12 and may be introduced into the agitation modules 11 and 12.

The introduction part 40 may be electrically connected to the processor. The processor is arranged such that the agitation opening 120 formed in any one of the two agitation modules 11 and 12 faces an upper side to control the introduction part 40 such an inclination degree of the introduction part 40 with respect to the forward direction becomes lower whereby the front end of the introduction part 40 is adjacent to the agitation openings 120 of the agitation openings 120 of the agitation modules 11 and 12 when the any one agitation module 11 and 12 may receive the semi-finished product "M". In the drawings, the second agitation module 12 is exemplarily in a state, in which it may receive the semi-finished product "M".

After the processor completes the introduction of the semi-finished product "M" to the agitation module 11 and 12, an inclination degree of the introduction part 40 increases whereby the introduction part 40 is controlled such the front end of the introduction part 40 becomes far away from the agitation module 11 and 12. Accordingly, through control of the inclination degree of the introduction part 40 described above, the seasoning applying apparatus 1 according to an embodiment of the present disclosure may allow the semi-finished product "M" to be introduced into the agitation modules 11 and 12, and after the introduction is completed, may prevent operations of the agitation modules 11 and 12 from being hindered by the introduction part 40 when the agitation modules 11 and 12 are operated.

In a modification of an embodiment of the present disclosure, instead of using a swing conveyor, a lift method, in which the division part, the semi-finished product counting part, and the introduction part are moved as a whole in the leftward/rightward direction by a movement apparatus, may be used. When the semi-finished product "M" is counted by the semi-finished product counting part and it is determined into which agitation module 11 and 12 the semi-finished product "M" is to be introduced, the movement apparatus may move the division part, the semi-finished product counting part, and the introduction part to a front side of the corresponding agitation module 11 and 12 along the leftward/rightward direction such that the semi-finished product "M" is introduced into the corresponding agitation module 11 and 12.

### Agitation Part 10

The agitation part 10 is a component for agitating the semi-finished product "M" together with the seasoning. The agitation part 10 may include two agitation modules 11 and 12. However, the number of agitation modules 11 and 12 is not limited thereto, and may be one or more than two.

The agitation module 11 and 12 are rotated to produce the product "P" by agitating the semi-finished product "M" introduced into interiors thereof together with seasoning while being rotated. The two agitation modules 11 and 12 may be arranged along the leftward/rightward direction. Accordingly, the two agitation modules 11 and 12 may be disposed in parallel along the reference direction without any precedence relationship. The two agitation modules 11 and 12 may be rotated in the leftward/rightward direction while a direction that is parallel to the leftward/rightward direction is taken as the axial direction thereof. Accordingly, each agitation modules 11 and 12 may be disposed densely without occupying an excessively large space. The rotation axes of the agitation modules 11 and 12 may be located on the same rotation axis line "A" that is the same straight line.

To enable rotation of the agitation modules 11 and 12 described above, the seasoning applying apparatus 1 according to the embodiment may include a driving part 50 including two driving modules 51 and 52 that rotate the agitation modules 11 and 12. The driving module 51 and 52 may include a support 521 that is fixed to the ground, and a motor 522 that is connected to the agitation module 11 and 12 to rotate the agitation module 11 and 12. The driving modules 51 and 52 may be disposed on an outside of the agitation modules 11 and 12 along the leftward/rightward direction. Accordingly, the two driving modules 51 and 52 may surround the two agitation modules 11 and 12 along the leftward/rightward direction. The first driving module 51 may be connected to the first agitation module 11, and the second driving module 52 may be connected to the second agitation module 12.

Each of the agitation modules 11 and 12 may be formed in a cylindrical shape that is similar to a disk. That is, the agitation modules 11 and 12 may be formed in a drum shape with a relatively small height that defines a cylinder, and thus, the seasoning and the semi-finished product "M" that are introduced into the interiors thereof may be agitated as they are rotated. The seasoning and the semi-finished product "M" that are introduced into the agitation modules 11 and 12 may be mixed while an operation of being lifted and dropping due to the gravitational force is repeated as the agitation modules 11 and 12 are rotated in one direction.

The agitation module 11 and 12 may include an agitation vessel 121 and a door 122. The agitation vessel 121 refers to a cylindrical vessel having an agitation space in an interior thereof. The door 122 is coupled to the agitation vessel 121 to open and close an agitation opening 120 formed in the agitation vessel 121. The processor may be electrically connected to the driving part 50 and the agitation part 10, and may control the rotation of the agitation vessel 121 and the opening and closing of the agitation vessel 121. The agitation opening 120 may be formed on a curved outer surface of the agitation vessel 121.

The door 122 may include a plate-shaped cover part that covers the agitation opening 120, and an opening/closing cylinder that is coupled to the cover part and the agitation vessel 121. The opening/closing cylinder may be a hydraulic cylinder. As the opening/closing cylinder is operated, the cover part may be attached to a peripheral area of the agitation opening 120 to close the agitation opening 120 or may deviate from the surrounding area of the agitation opening 120 to open the agitation opening 120. The opening/closing cylinder may be coupled to the agitation vessel 121 and the cover part such that the cover part is moved while being sliding along a circumferential direction of the agitation vessel 121, and a guide rail for guiding the movement and the position of the cover part may be provided to an outer surface of the agitation vessel, and thus, the cover part may be guided by the guide rail.

The agitation module 11 and 12 may include blades. The blades are rotatably coupled to an inside of the agitation vessel 121 to agitate the semi-finished product "M" and the seasoning that are introduced into the agitation space. The blade may have a shape that protrudes inward from an inner surface of the agitation vessel 121, and may have a shape that is bent or inclined in the forward/rearward direction or the leftward/rightward direction while protruding inward. The blades may also function to agitate the seasoning and the semi-finished product "M", but may be rotated to discharge the remaining seasoning through the agitation opening 120 in a state, in which the agitation opening 120 is disposed to face a lower side and is opened. Furthermore, when the semi-finished product "M" is introduced into the agitation vessel 121 through the agitation opening 120, the semi-finished product "M" may be rotated to be prevented from dropping to a bottom of the agitation vessel 121 at once and being damaged. The blades may be rotated together with the agitation vessel 121, but may also be rotated relative to the agitation vessel 121.

The agitation modules 11 and 12 may be rotate in one direction and an opposite direction to the one direction. Instead of being rotated by 360 degrees, the agitation modules 11 and 12 may perform a swing motion of repeating a motion of be rotating in one direction by a specific angle and then being rotated in an opposite direction thereto by another specific angle. In addition, the agitation modules 11 and 12 may perform a rotation or swing motion according to various operation programs to effectively agitate the semi-finished product "M" and the seasoning to produce a product "P" uniformly applied with the seasoning.

### Discharge Part 60

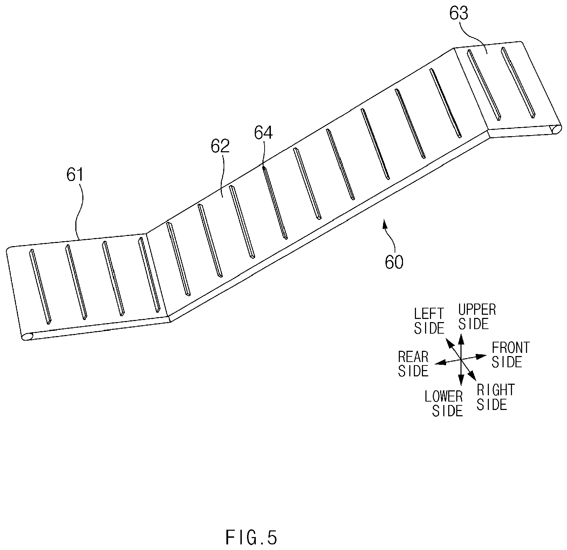

FIG. 5 is a perspective view of a discharge part 60 of the seasoning applying apparatus 1 according to an embodiment of the present disclosure.

The seasoning applying apparatus 1 according to an embodiment of the present disclosure may include a discharge part 60. The discharge part 60 moves the product "P" discharged from the agitation part 10 forward and provides it to a workbench 70. The discharge part 60 may include a conveyor belt that extends forward, and may transfer the semi-finished product "M" discharged from the agitation modules 11 and 12 forward while the semi-finished product "M" is seated on an upper surface thereof. When the product "P" is discharged from the agitation module 11 and 12, the agitation opening 120 may be rotated to face a lower side and the door 122 may be opened whereby the product "P" may drop into the discharge part 60 by an own weight thereof.

A shooter may be disposed between the discharge part 60 and the agitation module 11 and 12 to ensure that the product "P" discharged from the agitation opening 120 may drop stably to the discharge part 60 while not dropping to a wrong position. The shooter may have a shape of a funnel, a cross-sectional area of which decreases as it goes downward.

A rear end 61 of the discharge part 60 may be located on a lower side of the agitation module 11 and 12 such that the product "P" discharged downward from the agitation module 11 and 12 is stably seated. The rear end 61 of the discharge part 60 may extend forward and may be formed perpendicular to the upward/downward direction. An intermediate portion 62 of the discharge part 60 may have a shape that is inclined upward with respect to the forward direction. A front end 63 of the discharge part 60 may be connected to the workbench 70, and may deliver the product "P" to the workbench 70. The workbench 70 configured such that the operator completes the seasoning applying operation for the product P may be located on an upper side of a rear end 61 of the discharge part 60. The discharge part 60 may have the above-described shape whereby the workbench 70 may be located at a height that is suitable for the operator to perform an operation, and the discharge part 60 may deliver the product "P" to the workbench 70.

The discharge part 60 may include a plurality of discharge steps 64. The discharge steps 64 may extend in the leftward/rightward direction at a specific interval along the forward/rearward direction, and may be formed to protrude from a surface of the discharge part 60. They may be stop steps that ensures that the product "P" is stably transferred forward and upward while not rolling reversely due to own weights thereof at the intermediate portion 62 of the discharge part 60, at which the discharge step 64 has a shape that faces a right upper side. Structures that are similar to the discharge steps 64 may also be formed in the introduction part 40.

### Processor

The seasoning applying apparatus 1 according to an embodiment of the present disclosure may include a processor for control. The processor may be electrically connected to other components that constitute the seasoning applying apparatus 1, and may transmit control signals or receive data in the form of electrical signals.

The processor generates and transmits control signals that control each component. A micro controller unit (MCU), a central processing unit (CPU), a field programmable gate array (FPGA), an application specific integrated circuit (ASIC), and the like may be used as processors, but the types thereof are not limited thereto.

Control commands performed by the processor may be stored and utilized in a storage medium, and the storage medium may be a device, such as a hard disk drive (HDD), a solid state drive (SSD), a server, a volatile medium, or a non-volatile medium, but the types are not limited thereto. Furthermore, data required by the processor to perform tasks may be stored in the storage medium.

The processor may control an overall product production process by the seasoning applying apparatus 1. Hereinafter, the product production process of the edible product production system 100 performed under the control of the processor will be described in order according to movement of the raw material, semi-finished product "M", or product "P".

When sub-materials, such as a raw materials and seasoning, are introduced, the edible product production system 100 cleans the raw material and sub-materials by using compressed air and steam, and identifies whether it is suitable for introduction inspection standards by analyzing states of the raw material and the sub-materials by using cameras or sensors. The raw material and the sub-materials that satisfy the standards may be distinguished and stored according to their respective storage conditions. For keeping, the raw material and the sub-materials may be refrigerated.

A process of removing foreign substances may be performed on the kept raw material. When the raw material is pickled cabbage, a process of removing leaves that are not suitable for use in manufacturing the product "P" may be performed. The raw material, on which the sorting process has been completed, is provided to the seasoning providing apparatus 2.

After an amount of the seasoning that is to be discharged is set, and the operator or a transfer apparatus locates the raw material on a lower side of the nozzle, and transmit an operation start signal to the nozzle through manipulation of the switch or detection by a sensor to start the operation, the seasoning is discharged from the seasoning providing apparatus 2 to the raw material. The semi-finished product "M" formed by discharging the seasoning onto the raw material is seated on the semi-finished product conveyor by the operator or a transfer mechanism and may be transferred along the reference direction.

The division part 20 receives the semi-finished product "M" from the semi-finished product conveyor of the seasoning providing apparatus 2. As the processor controls and operates the division part 20, an interval between the semi-finished products "M" increases and the semi-finished products "M" may be separated.

The semi-finished product "M" is delivered to the semi-finished product counting part 30 by the division part 20. The processor determines an agitation module 11 and 12, to which the semi-finished product "M" is to be delivered, based on images or the number of the semi-finished products "M", which is acquired by the semi-finished product counting part 30, and operates the semi-finished product counting part 30 by using the determined agitation module 11 and 12 and delivers it to the introduction part 40, and the introduction part 40 is rotated to face the determined agitation module 11 and 12. Furthermore, the processor controls the introduction part 40 such that the inclination degree of the introduction part 40 with respect to the forward direction decreases such that the semi-finished product "M" may safely drop into the agitation module 11 and 12. The processor controls the door 122 of the determined agitation module 11 and 12 such that it is opened or is maintained in an open state.

For the processor to determine, to which of the two agitation modules 11 and 12 the semi-finished product "M" is to be introduced, the processor may identify whether a sum of the number of the semi-finished products "M" that is introduced into the two agitation modules 11 and 12 and not discharged and the number of the semi-finished products "M" that are transferred by the introduction part 40 is more than a specific limit number. Through the identification operation, the processor may control the introduction part 40 such that the semi-finished products "M" are delivered to the agitation modules 11 and 12 that are not more than the limit number. The limit number may be an upper limit of the number of semi-finished products "M" that may be accommodated by the agitation modules 11 and 12. Furthermore, the processor may perform a control such that the semi-finished product "M" is delivered to, among the agitation modules 11 and 12, the agitation module 11 and 12 that is not currently performing an agitation operation. When all the agitation modules 11 and 12 are performing am agitation operation, or a cumulative value of the number of semi-finished products "M" introduced into the agitation modules 11 and 12 that are not performing the agitation operation is more than the limit number, the processor may temporarily stop transferring the semi-finished product "M" forward by controlling the division part 20, the semi-finished product counting part 30, and the introduction part 40.

The processor may arrange the agitation modules 11 and 12 by rotating them such that the agitation opening 120 of the agitation module 11 and 12 that have not reached the limit number face an upper side whereby the agitation module 11 and 12 that has not reached the limit number are in a state, in which it may receive the semi-finished product "M". The processor may lower the inclination degree of the introduction part 40 such that the front end of the introduction part 40 is located adjacent to the agitation opening 120 of the agitation module 11 and 12 that has not reached this limit number. During the process of introducing the semi-finished product "M", the processor rotates the blade relative to the agitation vessel 121 to ensure that the semi-finished product "M" is safely located in the agitation vessel 121, and some supplementary seasoning may be further introduced into the agitation vessel 121. The supplementary seasoning may be provided to the agitation module 11 and 12 through the agitation opening 120 by an auxiliary seasoning providing part.

When any agitation module 11 and 12 receives the semi-finished product "M" and reaches the limit number, the processor ensures that no more semi-finished product "M" is delivered to the corresponding agitation module 11 and 12 and controls the agitation operation to occur in the corresponding agitation module 11 and 12. The processor increases the inclination degree of the introduction part 40 with respect to the forward direction to allow the introduction part 40 to deviate from the agitation opening 120 of the corresponding agitation module 11 and 12, and controls the door 122 to close the agitation opening 120. Thereafter, the processor controls the agitation module 11 and 12 and the driving part 50 according to a preset program to agitate the semi-finished product "M" and the seasoning in the agitation module 11 and 12 whereby the product "P", in which the seasoning is uniformly applied to the semi-finished product "M", is formed. The preset program may include rotation speeds, rotation directions, rotation angles, rotation times, and the like of the blade and the agitation module 11 and 12.

When the agitation operation is completed, the processor rotates the agitation module 11 and 12 such that the agitation opening 120 faces a lower side. The processor opens the door 122 to drop the product "P" into the discharge part 60 through the agitation opening 120 so that the product "P" is discharged from the agitation module 11 and 12. The processor may rotate the blades relative to the agitation vessel 121 to discharge foreign substances, such as leaves separated from the remaining seasoning or the semi-finished product "M" through the agitation opening 120. The processor initializes the cumulative value of the limit number such that the semi-finished product "M" may be introduced again into the agitation module 11 and 12 that has discharged the product "P". After the discharge is complete, the processor may control the door 122 to close the agitation opening 120.

The product "P" discharged to the discharge part 60 is transferred forward and upward by the discharge part 60 and is delivered to the workbench 70. A scale for acquiring and identifying a weight of the product "P" may be disposed in the workbench 70, and the operator may identify the weight of the delivered product "P", and may add the leaves or the seasoning when the weight is less than a lower limit of a specific reference weight range and may carrying out a weight calibration by removing the leaves from the product "P" when the weight is more than the upper light of the reference weight range whereby the weight of the product "P" is located in the reference weight range. Finally, it may be identified whether the weight of the corrected product "P" is within the reference weight range by using a scale.

Thereafter, the product "P" may be introduced into a pouch by the operator or a packaging device, and is packaged internally by fastening and sealing the pouch by using a cable tie or a clip. The internally packaged products may pass through an X-ray metal detector for a metal inspection, and the internally packaged products that have passed the X-ray metal detector may be externally packaged with packaging paper. Some stamps may be placed on the internally packaged products. The externally packaged products may be refrigerated.

In the above, even though all the components constituting the embodiment of the present disclosure have been described as being combined or operated in combination, the present disclosure is not necessarily limited to this embodiment. That is, as long as it is within the scope of the purpose of the present disclosure, all of the components may be operated by selectively combining one or more of them. In addition, terms such as "include," "comprise," or "have" described above mean that the corresponding component may be present, unless specifically stated to the contrary, and thus do not exclude other components. Rather, it should be interpreted as being able to include other components. Unless otherwise defined, all terms used herein, including technical or scientific terms, have the same meanings as those generally understood by those skilled in the art to which the present disclosure pertains. Such terms as those defined in a generally used dictionary are to be interpreted as having meanings equal to the contextual meanings in the relevant field of art, and are not to be interpreted as having ideal or excessively formal meanings unless clearly defined as having such in the present application.

The above description is a simple exemplary description of the technical spirits of the present disclosure, and an ordinary person in the art, to which the present disclosure pertains, may make various corrections and modifications without departing from the essential characteristics of the present disclosure. Therefore, the embodiments disclosed in the present disclosure are not for limiting the technical spirits of the present disclosure but for describing them, and the scope of the technical spirits of the present disclosure is not limited by the embodiments. The protection scope of the present disclosure should be construed by the following claims, and all the technical spirits in the equivalent range should be construed as being included in the scope of the present disclosure.

## Claims

1. A seasoning applying apparatus comprising:
an agitation part including an agitation module configured to agitate an introduced semi-finished product together with seasoning while being rotated to produce a product;
an introduction part configured to move the semi-finished product forward and deliver the semi-finished product to the agitation module; and
a discharge part configured to move the product discharged from the agitation part forward and provide the product to a workbench.

2. The seasoning applying apparatus of claim 1, wherein two agitation modules are provided, and
wherein the introduction part is configured to selectively deliver the semi-finished product to any one of the two agitation modules.

3. The seasoning applying apparatus of claim 2, further comprising:
a semi-finished product counting part configured to count the semi-finished product and deliver the counted semi-finished product to the introduction part; and
a processor electrically connected to the introduction part and the semi-finished product counting part,
wherein the introduction part is configured to deliver the semi-finished product exiting from the semi-finished product counting part to the agitation part, and
wherein the processor determines an agitation module, to which the semi-finished product having passed through the semi-finished product counting part is to be delivered, based on the number of the semi-finished products, which is acquired by the semi-finished product counting part, and controls the introduction part such that the semi-finished product having passed through the semi-finished product counting part is delivered to the determined agitation module.

4. The seasoning applying apparatus of claim 3, wherein the processor identifies whether a sum of the number of the semi-finished products introduced into the two agitation modules and not discharged and the number of the semi-finished products transferred by the introduction part is more than a specific limit number, and controls the introduction part such that the semi-finished products are delivered to the agitation modules being not more than the limit number.

5. The seasoning applying apparatus of claim 4, further comprising: a division part configured to transfer the semi-finished products from a rear side to a front side of the introduction part to deliver the individual semi-finished products to the introduction part.

6. The seasoning applying apparatus of claim 2, wherein the introduction part is a swing conveyor having a first state, in which a front end of the introduction part is located adjacent to, among the two agitation modules, a first agitation module such that the semi-finished product is provided to the first agitation module, and a second state, in which the front end of the introduction part is located adjacent to, among the two agitation modules, a second agitation module such that the semi-finished product is provided to the second agitation module.

7. The seasoning applying apparatus of claim 2, further comprising:
a processor electrically connected to the introduction part,
wherein the processor controls the introduction part such that an inclination degree of the introduction part with respect to a front side becomes lower whereby an agitation opening formed in any one of the two agitation modules is disposed to face an upper side such that a front end of the introduction part becomes closer to the agitation opening when the any one agitation module is able to receive the semi-finished product.

8. The seasoning applying apparatus of claim 2, wherein the two agitation modules are arranged along a leftward/rightward direction, and are configured to be rotated while a direction being parallel to the leftward/rightward direction is taken as an axial direction thereof.

9. The seasoning applying apparatus of claim 1, wherein the agitation module is formed in a cylindrical shape.

10. The seasoning applying apparatus of claim 1, wherein the agitation module includes a tubular agitation vessel having an agitation space in an interior thereof, and a door coupled to the agitation vessel to open and close the agitation opening formed in the agitation vessel.

11. The seasoning applying apparatus of claim 10, wherein the agitation module further includes a blade rotatably coupled to an inside of the agitation vessel to agitate the semi-finished product and the seasoning, which are introduced into the agitation space.

12. The seasoning applying apparatus of claim 11, further comprising:
a processor electrically connected to the agitation part,
wherein the processor rotates the blade to discharge remaining seasoning through the agitation opening in a state, in which the agitation opening is disposed to face a lower side and is opened.

13. The seasoning applying apparatus of claim 1, further comprising:
a processor electrically connected to the agitation part,
wherein the processor performs a control to rotate the agitation module in one direction and an opposite direction to the one direction.

14. The seasoning applying apparatus of claim 1, wherein a rear end of the discharge part is located on a lower side of the agitation module such that the product discharged downward from the agitation module is seated thereon, and an intermediate portion of the discharge part has a shape inclined upward with respect to a front side.

15. An edible product production system comprising:
a seasoning providing apparatus configured to provide seasoning to a raw material to form a semi-finished product; and
a seasoning applying apparatus configured to apply the seasoning to the semi-finished product to form a product,
wherein the seasoning applying apparatus includes:
an agitation part including a plurality of agitation modules configured to agitate the introduced semi-finished product together with the seasoning; and
an introduction part configured to move the semi-finished product delivered from the seasoning providing apparatus forward and selectively deliver the semi-finished product to any one of the plurality of agitation modules.
